# EUROPEAN PATENT APPLICATION

(11) **EP 1 642 504 A1**
(43) Date of publication of application: **05.04.2006**
(21) Application number: 04077674.2
(22) Date of filing: 29.09.2004
(51) Int. Cl.: A23C 19/16, A23L 1/00

(54) **Cheese coating compositions with improved wax adhesion properties**

(71) Applicant: CSK Food Enrichment B.V., 8901 BA Leeuwarden (NL)
(72) Inventor: Kevelam, Jan, 8901 BA Leeuwarden (NL); Koopmans, Wieger J., 8901 BA Leeuwarden (NL); Meijer, Wilco, 8901 BA Leeuwarden (NL)
(74) Representative: Huygens, Arthur Victor

(57) **Abstract**

The present invention provides a new composition for coating food and food ingredients, in particular cheese, and the use of such a composition. More in particular, a protective cheese coating is provided involving certain hydrophilic polymers as additives, allowing an improved adhesion of an outer layer of cheese wax ("paraffin"). These hydrophilic polymers are selected from the group consisting of hydrophilic polymers such as caseins, starches, modified starches, cellulose derivatives such as cellulose ethers, alginates, naturally occurring gums, such as gum arabic, fermentation produced polysaccharides such as xanthan gum. Preferred additives are carboxymethyl cellulose, hydroxyethyl cellulose, arabic gum, amylogum, starch and derivatives thereof, and casein.

## Description

The present invention relates to a new composition for coating food and food ingredients, in particular cheese, and the use of such a composition. More in particular, the invention relates to a protective cheese coating involving certain hydrophilic polymers as additives, allowing an improved adhesion of an outer layer of cheese wax ("paraffin").

For a controlled ripening and protection of hard and semi-hard cheeses, such as Dutch Gouda, the cheeses are usually treated with a dispersion which upon drying forms a protective film around the cheese. Such a coating fulfils essentially the following demands:
- protection of the cheese
- prevention of formation of cracks during ripening
- carrier of fungicides
- cosmetic reasons: colour, avoiding contamination, etc.

After application of the dispersion to the cheese-rind a film is formed upon drying of the coating material. Under storage-house conditions (temperature and relative humidity) such a film is usually formed within 24 hours.

After the cheese has obtained the desired flavour and texture corresponding to a certain ripening time, it is commonly treated with a final layer of cheese wax *inter alia* preventing additional weight loss due to water evaporation from the cheese as well as the formation of moulds during storage and transportation.

In practice, the adhesion of an outer layer of protective wax to a coated cheese is often not sufficient to guarantee a blister-free appearance of the coated and waxed cheese during prolonged periods of storage and/or transport. The occurrence of blisters between the cheese wax and the coating is visually unattractive to the retailers and the consumer. Besides, blisters are vulnerable to mechanical damage in all stages of the logistics of the cheese. As soon as the layer of cheese wax is damaged, fungi and other spoilage organisms may attack the cheese, resulting in economical damage.

It has been proposed to replace the above-mentioned conventional cheese waxes of mineral origin by mixtures of wax-like fatty acid glyceryl esters with waxes which are not of mineral origin, as described, for example, in EP 0 403 030 of Paramelt Syntac BV. Indeed, it is known that the use of Paradip® Nowax can extend the shelf-life of waxed cheeses as compared with conventional cheese waxes, such as Paradip® Yellow B. Thus, blisters between the cheese coating and the outer layer of Nowax occur less readily as compared to coated cheeses having an outer layer of conventional hydrocarbon-based cheese wax. However, acetoglyceride-based cheese waxes have a higher permeability to water vapour resulting in weight loss of the cheese over time and are more expensive as compared with the traditional cheese waxes of mineral origin, making them economically less attractive in use as compared with hydrocarbon-based cheese waxes.

EP 0 141 299 of H. B. Fuller GmbH discloses the use of a first coating step involving dipping a cheese or piece thereof into a melt of acetic esters of monoglycerides of hydrogenated fatty acids, which after cooling forms an intermediate layer onto which molten mixtures of microcrystalline wax and paraffin can be applied by dipping. The adhesion of the hydrocarbon-based wax mixture to the cheese is much improved due to the presence of the intermediate layer of monoglycerides. Clearly, the application of an intermediate coating layer has significant disadvantages in terms of cost - the materials of choice for the intermediate layer are relatively expensive as compared to hydrocarbon-based cheese wax - and logistical complexity.

The main constituents of cheese coatings are water-borne base dispersions of synthetic copolymers, comprising poly(vinyl acetate-*co*-di-*n*-butylmaleinate), poly(vinyl acetate-*co*-ethylene) and the like. The solid matter content of such base dispersions generally ranges between 40 and 60%. One particular example of a base dispersion comprising poly(vinyl acetate-*co*-di-*n*-butylmaleinate) is Mowilith SDM 4230 KL (solid matter content 45%), manufactured by Celanese Emulsions GmbH, Frankfurt am Main, Germany.

Whilst these base dispersions are typically produced by the chemical industry, they are commonly formulated to products having the desired specifications of the dairy industry by specialised factories such as ythe present applicant, CSK Food Enrichment BV, Leeuwarden, The Netherlands. The formulation of cheese coatings involves the mixing of the base dispersion with other ingredients such as water, to adapt the viscosity and the solid matter content of the coating; a polyene fungicide, such as natamycin, inter alia supplied by DSM Food Specialties, Delft, The Netherlands; and a food grade dye, e.g. annatto. Optionally, preservatives such as sorbic acid or its potassium or sodium salts may be added. One particular example of a (range of) ready-for-use commercially available cheese coating includes (the coating range with trade name of) CesKa®-coAt WL (CSK Food Enrichment BV, Leeuwarden, the Netherlands), hereinafter referred to as CESKA WL.

In order to limit logistical complexity within their manufacturing sites, the specialised factories which are involved with the production of cheese coatings prefer to use the smallest number of base dispersions as a starting point for the formulation of products having the broadest range of functionalities. It is for this reason that the prior art teaches a number of coating additives for cheese coatings.

NL 1004792 of Campina Melkunie describes the use of fillers, which are preferably inert, to increase the solid matter content of cheese coatings as to reduce the drying time. Depending of the particle size of the fillers, they can also be used to obtain an artisanal appearance of the coating.

DE 1137934 teaches the use of plasticizers and pigments to regulate coating flexibility and permeability of polyvinylacetate dispersions.
WO 03054041 of Clariant GmbH discloses new food coating substances containing a softener-free, aqueous copolymer poly(vinyl ester) dispersion made of emulsion polymer, emulsifier, protective colloid and other optional stabilizers. The stabilizers include starches, alginates, caseinates, cellulose ethers etc. These compounds can also be added after completion of the polymerisation reaction to modify the application viscosity of a coating dispersion, and coating properties such as gloss and water vapour permeability.

Therefore, there is still room for improvement, in particular in providing universally applicable cheese coatings which can be formulated on the basis of conventional base dispersions for cheese coatings, and onto which - after forming a dry film - those for cost and permeability reasons preferred conventional cheese waxes of mineral origin have an improved adhesion, and which coatings can be implemented by cheese manufacturers in their existing production and logistical apparatus without the need for additional logistical complexity.

### Objects of the invention

It is an object of the present invention to provide additives for cheese coating compositions which compositions provide after drying on cheese a significantly improved adhesion layer for cheese waxes of mineral origin, as compared with the coating dispersions hitherto known. These additives are preferably food-grade and should not adversely influence the overall properties of the dried film on cheese..

It is another object of the present invention that these additives can be admixed to base dispersions for cheese coatings after the polymerization reaction forming an aqueous base dispersion of copolymer.

### Summary of the invention

Surprisingly, it has now been found that these objectives can be met by using certain hydrophilic biopolymers as additives for cheese coating compositions which may be chemically modified and which are post-added to commonly used aqueous copolymer poly(vinyl ester) base dispersions for cheese coatings, such as generally disclosed in WO 03/054041.

In accordance with one aspect of the present invention the additives for the improved cheese coating compositions are selected from the group consisting of hydrophilic polymers such as caseins, starches, modified starches, cellulose derivatives such as cellulose ethers, alginates, naturally occurring gums, such as gum arabic, fermentation produced polysaccharides such as xanthan gum, and the like. Suitable and preferred additives are carboxymethyl cellulose (CMC), hydroxyethyl cellulose, arabic gum, amylogum, starch and derivatives thereof, and casein, of which CMC is most preferred.

### Detailed description of the invention

For efficient water uptake whilst keeping the structural integrity of a cheese coating, it is of importance that the functional concentration of the hydrophilic additive is sufficiently low and therefore has some polymeric nature.

On the other hand, it is essential that at a certain functional concentration of the hydrophilic additive in the coating it does not increase the viscosity of the coating dispersion to such an extent that the application of the dispersion on the cheese becomes too difficult. As is well known in the art, an important requirement for the application of coatings on cheese using cheese coating machines (e.g. those of the PLASTIMA range manufactured by Doeschot, Alkmaar, the Netherlands) is that the coatings should have a viscosity of typically between 20 and 80 Poise, more preferably between 30 and 60 Poise. A lower viscosity would result in unacceptable losses of coating due to run off from the machine and from the cheese, as well as in cleaning problems of the machine.

The low vapour coatings used herein have Brookfield viscosities which lie within the preferred range of 30-60 Poise, or can be diluted with a few percent of water to lower the viscosity down to within the preferred range, making them perfectly suitable for automated application. The addition of water (as well as some colorants and preservatives) is a common procedure for producing tailor-made coatings having a certain desired viscosity.

On the other hand, the solid matter content of commercially available cheese coatings must exceed a certain minimum level in order to provide a certain thickness ("protective power") and to limit the drying time of the coating to acceptable levels.

In other words, at the functional concentration of the hydrophilic additive, the desired application viscosity of the dispersion must be maintained by keeping the total solid matter content of the dispersion to such a level that the (protective or drying) properties of the dried coating film remain of the desired high level. Thus, commercially available cheese coatings have typical application viscosities between 10 and 100 Poise, more preferably between 20 and 80 Poise; the solid matter content of these coatings preferably ranges between 30 and 50 wt%, more preferably between 35 and 45 wt%.

For optimal compatibility with existing coating and cheese handling procedures it is strongly desired that the coating additives of the present invention do not influence the solid matter content and/or the viscosity of the coating dispersion to a significant extent, as compared to a coating formulation not containing the additives, at functional use levels of the hydrophilic additive of the present invention.

From both a formulatory and an economic perspective, functional use levels of the additive preferably range between 0.1 and 5 wt.%, more preferably between 0.25 and 2.5 wt.%.

The above-mentioned boundary conditions for cost and functional effectiveness of the additives of the present invention, compatibility with current production processes and processing lines as well as the level of overall coating properties, pose strict restrictions on the choice of the hydrophilic additives as regarding to their molecular weight. In practice this parameter is most conveniently estimated from the viscosity of an aqueous solution of the polymer at certain standardised conditions (salt concentration, pH and temperature).

For the purpose of this disclosure, a key boundary condition for using the additives of the present invention is that the cheese coating formulation containing the additives is characterised by a solid matter content which deviates by no more than 3 percentile, and has the same viscosity (with a tolerance of 10 Poise) as compared to the solid matter content of the same cheese coating formulation without the additive, at a use level of 0.5 wt.%, and defined for a ready-for-use composition having a nominal brookfield viscosity of 45 Poise (Brookfield LVT, spindle 4, 30 rpm, room temperature). In effect, a percentile is defined as a "percent point" - thus, if Coating One has a solid matter of 42%, and Coating Two is characterised by a solid matter content of 46%, then the difference in solid matter content of the two coatings is 4 percentiles.

Surprisingly, it has been found that hydrophilic polymers as defined above having a Brookfield viscosity of a 5% aqueous solution lower than 10,000 mPa.s which are used in a cheese coating at a level ranging from 0.05 to 3%, preferably 0.1 to 1%, show an improved adherence properties for the wax coating without substantially affecting the viscosity (see Table 1.3 below). These hydrophilic polymers are therefore excellent additives for cheese coating compositions under these conditions and appear to control the water-permeability of the coating rather than affecting its viscosity.

It has been also found (results not shown) that the hydrophilic polymers as defined above, upon addition at use concentrations of 0.5% with equal (± 10 Poise as compared with a reference coating containing no additives) standardised Brookfield viscosity of the coating will result in a reduction of the dry solid content of the coating with no more than 3 percentiles.

These findings show that high molecular weight hydrophilic additives such as Cekol 30,000 P act as true thickeners which may still contribute certain desired wax adhesion (water binding) properties to the cheese coating formulation, but which are nevertheless affecting the overall cheese coating properties in an unfavourable manner by reducing the solid matter content of the coating formulation (at equal standardised Brookfield viscosity) to such an extent (i.e. by more than 3 percentiles) that the drying and/or protective properties of the dried film are no longer acceptable.

In sharp contrast, the lower molecular additives such as Amylogum CLS, casein, Cekol 30 or Cekol 2000 appear to have favourable wax adhesion (water binding) properties whilst keeping the overall coating properties to a good level (Table 1.2). This is because within the scope of the invention they are not classified as thickeners or rheology modifiers - or in other words, the solid matter content of the coating formulation containing these additives is not reduced to an appreciable extent (at equal standardised Brookfield viscosity, and compared to a reference coating without the additives) at a use level of 0.5%.

**Table 1.3 Brookfield viscosities of aqueous solutions of various hydrophilic polymers at different concentrations**

| Hydrophilic polymer | conc. / conc. / wt% | Type of Type of viscosimeter | Spindle | Rotation Rotation speed (rpm) | T (°C) | viscosity mPa.s |
|---|---|---|---|---|---|---|
| Cekol 30,000 P | 5 | L | 4 | any | 23.5 | out of range (>300,000) |
| Cekol 30,000 P | 1 | L | 4 | 30 | 23.5 | 1360 |
| Cekol 2000 S | 5 | L | 4 | 30 | 23.5 | 5100 |
| Cekol 2000 S | 1 | L | 4 | 30 | 23.5 | 100 |
| Cekol 30 | 5 | L | 4 | 30 | 22.5 | 500 |
| Cekol 30 | 1 | R | 2 | 100 | 22.5 | 38 |
| Amylogum | 5 | R | 2 | 100 | 22.5 | 18 |
| Casein | 5 | R | 2 | 100 | 22.5 | 22 |

"Cekol" is a trade name of Noviant, representing food grade carboxymethylcellulose. The molecular weight of the hydrophilic polymer increases in going from Cekol 30 to Cekol 30,000. The Cekol products described in this table have been obtained from Noviant, Nijmegen, The Netherlands. Amylogum CLS is a product of Avebe, The Netherlands. Casein (type spray bland) was obtained from DMV Int., Veghel, The Netherlands. "conc." refers to the aqueous concentration of the hydrophilic polymer, in weight%.

Suitable and preferred base dispersions for the improved coating composition as defined to which the coating additives are added include aqueous dispersions of copolymers of vinylic and maleic esters of having side chains composed of saturated hydrocarbons. A suitable vinylic ester of a saturated hydrocarbon for use in the copolymer which forms part of the coating composition of the invention is vinyl acetate.

Suitable and preferred maleic esters for use in the copolymer component of the coating composition according to the invention are, for example, dibutyl maleinate and di-2-ethylhexyl maleinate, of which dibutyl maleinate is most preferred.

A suitable and preferred protective colloid for use in the coating composition is polyvinyl alcohol.

In a preferred embodiment of the present invention the base dispersion and the novel additives described herein are optionally admixed with water, colourants, preservatives (such as sorbic acid or its alkali metal salts), fungicides (for instance of the polyene type, such as natamycin) and fillers, as to produce cheese coating formulations which meet the specific requirements of the customer. Typical concentrations of natamycin range between 10 and 1500 ppm, more preferably between 50 and 250 ppm. Sorbic acid or its alkali salt are typically employed at concentrations between 500 and 15,000 ppm. Water is added to the base dispersion in concentrations between 1 and 20 wt%. The additive of the present invention is preferably dissolved in this water phase.

The new coating compositions according to the present invention provide an excellent coating on cheese, in particular hard and semi-hard cheeses, with better wax adhesion properties than conventional coatings which are employed for the same purposes. As stated before, the prior art discloses various ways to improve the adhesion of an outer layer of wax-like materials onto a coated cheese. However, none of these combine the following advantageous properties of the cheese coating according to the present invention which are desired by the cheese producers:
- favourable economy of hydrocarbon-based waxes,
- high gas and water vapour permeability of hydrocarbon-based waxes which are desired for minimal financial loss during transport and storage of cheese, and
- logistical simplicity of the conventional process whereby coated cheeses receive one layer of cheese wax by dipping, without the need for applying intermediate layers of any kind.

The pH of the composition is suitably in the range of 3.5-6.0. However, a pH of 5 or lower and in particular of about 4.8 is generally preferred, since the storage life of the composition is thereby increased. Such a pH can be advantageously adjusted by the addition of a suitable acid, for example hydrochloric acid and/or acetic acid, or the use of a suitable buffer solution.

The coating composition according to the invention preferably has a viscosity (Brookfield LVT, sp. 4, RT) of 10-300 Poise, most preferably 20-100 Poise. The dry solids content generally is in the range of 30-60%, and and most preferably of 35-45%.

As an alternative embodiment for the preparation of the coating composition according to the invention the sequence of some steps can be changed.

The ready-for-use compositions can be suitably stored for a longer period of time, from several days up to some 6 months, at a temperature of 4-20°C, before it is used.

The coating composition according to the invention is generally applied to the desired product at a temperature of between 10-30°C, and the product is then dried. ln general, the composition can be applied at any suitable point in time, as is the case now with state of the art compositions. The application may occur manually or mechanically in a way which is well known to a person skilled in the art. Drying generally occurs in the air, but may also be accelerated, if desired. Optionally an after-treatment of the product may take place, for example to reinforce its mechanical properties or to embellish its appearance. These steps are all known as such and will therefore not be discussed in detail.

The invention further relates to the use of a coating composition according to the present invention, as described above, in the manufacturing or rather conservation of cheese, both on semi-hard and hard cheese, such as Gouda cheese, Maasdam cheese, Edam cheese, Emmental cheese, Gruyère cheese, Parmesan cheese and Cheddar cheese, and can also be used on soft cheese, such as most French cheese and 'smear' cheese. The cheese on which the composition according to the invention is applied may be of any source, for example cheese made from cow milk, goat milk, sheep milk, etc., or mixtures thereof.

The present invention relates also to cheese per se, when coated with a coating composition as defined above.

The invention is further illustrated by the following example which is not to be construed as limiting the invention in any respect. The percentages in this specification are percentages by weight, unless stated otherwise. Commercially available cheese coatings based upon vinyl acetate - dibutyl maleinate copolymers have been obtained from CSK Food Enrichment BV, Leeuwarden, the Netherlands. A typical product code is CesKa®-coAt WL xxx.yy.zz, wherein xxx relates to the content of natamycin in ppm; yy relates to the concentration of a yellow dye, Annatto, and zz is the Brookfield viscosity (determined at room temperature using a Brookfield LVT viscosimeter, spindle 4).

### Example

A Dutch cheese, type Gouda, produced by Frico Cheese (Oosterwolde, The Netherlands), having a fat content in the solid matter content of 48% and a nominal weight of 4.5 kg, is taken out of the brine bath and coated according to a coating protocol which is generally as follows:
Specifically, approximately 3 to 4 days after production, within a few hours after coming out of the brine, the cheeses are placed on wooden shelves, and by manual application (using a sponge) receive a thin coating layer on the top cylindric half of the cheese as well as on the sides. The amount of coating which is applied in one run ranges (on average) between 5 and 10 g (total weight basis). The coating is allowed to dry for between one to three days, the cheeses are turned on the shelves and the procedure is repeated until the cheeses reach an age of 29 days after production. More precisely, the coating scheme actually employed was as follows (turning of the cheese followed by half-side coating of the cheese): at 4, 7, 10, 13, 15, 17, 19, 22, 25 days after production. The storage conditions are controlled at a temperature of 13 ± 1°C and at a relative humidity of 85 ± 3%.

Cheese coating properties are determined at a cheese age of 15 days after production; the weight of the cheeses is determined at t = 0 days after brining and t = 25 days after brining; evaporative weight loss is determined as the difference in weight of the cheeses determined at t = 25 days and t = 0 days, corrected for the total amount of coating applied (on a solid matter basis). The pH of all coatings ranges between 4.5 and 5.5

Table 1.1 summarises the characteristics of the coating compositions used.

**Table 1.1 Characterisation of the coating compositions used**

| Coating | Brookfield viscosity (Poise)^{a} | Solid matter content (wt%)^{b} | Additive for adhesion adhesion | Additive concentration |
|---|---|---|---|---|
| Reference (WL 500.02.45) | 44 | 40.8 | None | - |
| Coating 1.1 | 35 | 40.0 | Amylogum CLS^{c} | 2 % |
| Coating 1.2 | 50 | 40.7 | Sodium caseinate^{d} | 1 % |
| Coating 1.3 | 52 | 39.6 | Cekol 30G^{e} | 0.5 % |

| | | | | |
|---|---|---|---|---|
| a)According to ISO 2555; Brookfield viscosimeter LVT, spindle 4, 30 rpm, 23°C | | | | |
| b)According to ISO 1625. | | | | |
| c)A modified starch, ex Avebe, Veendam, The Netherlands | | | | |
| d)Type spray bland, ex DMV Int., Veghel, The Netherlands | | | | |
| e)A low molecular weight grade carboxymethylcellulose, ex Noviant, Nijmegen, NL | | | | |

Table 1.2 summarises cheese coating properties and evaporative weight loss for cheeses treated with a reference coating (CesKa®-coAt WL 500.02.45 of CSK Food Enrichment BV, Leeuwarden, The Netherlands) as well as several low vapour coatings having the same natamycin content (500 ppm), colour strength (0.3% Annatto WS solution of CSK Food Enrichment BV, Leeuwarden, The Netherlands) and comparable Brookfield viscosity (45 ± 5 Poise determined at room temperature using a Brookfield LVT, spindle 4, 30 rpm).

**Table 1.2 Comparision of several low vapour coating compositions with reference coating, evaluated for coating properties and evaporative water loss from Gouda-type cheeses**

| Coating | Gloss^{a} | Tack^{b} | Crackling Under Stress^{c} | Paraffin Adhesion^{d} | Evaporative weight loss (wt.%) after 25 days |
|---|---|---|---|---|---|
| Reference | Good | Good | Good | Average | 10.2 |
| Coating 1.1 | Good | Good | Good | Good | < 10 |
| Coating 1.2 | Good | Good | Good | Good | < 10 |
| Coating 1.3 | Good | Good | Good | Good | < 10 |

| | | | | | |
|---|---|---|---|---|---|
| ^{a)} Gloss is visually observed and evaluated by a panel of persons skilled in the art; | | | | | |
| ^{b)} Tack is defined as the extent of adhesion of the cheeses on the wooden shelves, and evaluated by a panel of persons skilled in the art; | | | | | |
| ^{c)} Crackling under stress is the extent of crackling of the coating when the cheese is dropped onto the floor from a height of 1 meter, as evaluated by a panel of persons skilled in the art; | | | | | |
| d) Paraffin adhesion is the absence of blisters between the coating and a layer of paraffin when the cheeses have reached an age of 85 days after production. The paraffin (Paradip Yellow B1, ex Paramelt, The Netherlands) is applied by a quick immersion of coated cheeses in liquid paraffin of 100°C when the cheeses have an age of 25 days after brining (drying time after last coating treatment before paraffin treatment is 48 to 72 hrs). This parameter is scored by a panel of persons skilled in the art. | | | | | |

Clearly, the invention demonstrates a well improved adhesion of hydrocarbon-based cheese wax to cheeses coated with compositions containing the additives of the present invention. It also appears that the additives act to reduce evaporative water loss of cheese during ripening, as compared with cheeses which were treated with a reference coating without the additives. Without wishing to be bound to any theory, at least part of this effect is believed to account for the enhanced water uptake by the coating film due to the presence of the hydrophilic polymeric additives.

## Claims

1. An additive for a cheese coating composition which is selected from the group consisting of hydrophilic polymers such as caseins, starches, modified starches, cellulose derivatives such as cellulose ethers, alginates, naturally occurring gums, such as gum arabic, fermentation produced polysaccharides such as xanthan gum.

2. An additive according to claim 1 which carboxymethyl cellulose, hydroxyethyl cellulose, arabic gum, amylogum, starch and derivatives thereof, or casein.
